# EUROPEAN PATENT APPLICATION

(11) **EP 4 428 749 A1**
(43) Date of publication of application: **11.09.2024**
(21) Application number: 22889836.7
(22) Date of filing: 25.10.2022
(51) Int. Cl.: G06K 19/06

(54) **OPTICAL MULTILAYER BODY AND SYSTEM**

(30) Priority: 04.11.2021 US 202163275628 P
(71) Applicant: Nitto Denko Corporation, Ibaraki-shi, Osaka 567-8680 (JP)
(72) Inventor: KAWAGUCHI, Mami, Ibaraki-shi, Osaka 567-8680 (JP); NUMATA, Yudai, Ibaraki-shi, Osaka 567-8680 (JP); MATSUDA, Shoichi, Ibaraki-shi, Osaka 567-8680 (JP); SATO, Naoki, Tokyo 107-0052 (JP)
(74) Representative: Hoffmann Eitle
(86) International application number: PCT/JP2022/039694
(87) International publication number: WO 2023/080016

(57) **Abstract**

An optical multilayer body (100) according to the present invention has a first main surface and a second main surface that is on the reverse side of the first main surface. This optical multilayer body (100) comprises: an optical filter layer (110) which transmits infrared light, while diffusely reflecting visible light; and a recording medium layer (120) which is arranged on the second main surface side of the optical filter layer, while having a pattern that can be read with infrared light through the optical filter layer. This optical multilayer body is configured such that the pattern is not visible through the optical filter layer.

## Description

### TECHNICAL FIELD

The present disclosure relates to an optical stack and a system using the same.

### BACKGROUND ART

Today, AR (Augmented Reality) markers such as barcodes, QR codes (registered trademark), ArUco markers, chameleon codes and the like are used for various uses (e.g.,

Patent Document 1). An AR marker is usually provided at a position where a user can see, and therefore, the external appearance or design of an item (printed matter, etc.) provided with the AR marker is spoiled.

In addition, such an AR marker is accessible by anybody, and cannot be used for the purpose of, for example, conveying confidential information.

Patent Documents 2 and 3 each disclose a method by which toner absorbing or reflecting infrared light is used to form an image that is not easily visible by visible light in a state where such an image overlaps an image visible by the visible light.

### CITATION LIST

### PATENT LITERATURE

Patent Document No. 1: Japanese Laid-Open Patent Publication No. 2016-224485
Patent Document No. 2: Japanese Laid-Open Patent Publication No. 2018-132720
Patent Document No. 3: Japanese Laid-Open Patent Publication No. 2020-154305

### SUMMARY OF INVENTION

### TECHNICAL PROBLEM

However, the method described in each of Patent Documents 2 and 3 is for forming an image that is not easily visible by the visible light in a state where such an image overlaps an image visible by the visible light, and therefore, is not usable for a variety of uses. In addition, the toner absorbing or reflecting infrared light is not completely transparent. Therefore, there is a limitation on the graphical pattern to be included in the image that is to overlap an image visible by the visible light. There is another problem that the above-described methods are not usable for an entirely white image.

Thus, the present invention has an object of providing an optical stack is configured so that a pattern readable by infrared light is not visible, and a novel system using the same.

In the present invention, a pattern that is readable by infrared light and is to be prevented from being visible, is not limited to an AR marker listed above an as an example, and may be any of designs in general including illustrations, letters, motifs, colors and the like.

### SOLUTION TO PROBLEM

Embodiments of the present invention provide the solutions described in the following items.

### [Item 1]

An optical stack having an first main surface and a second main surface on the opposite side to the first main surface, the optical stack comprising:
an optical filter layer transmitting infrared light and diffusely reflecting visible light; and
a recording medium layer disposed on the side of the second main surface with respect to the optical filter layer, the recording medium layer having a pattern readable by the infrared light through the optical filter layer,
wherein the optical stack is configured such that the pattern is not visible through the optical filter layer.

### [Item 2]

The optical stack of item 1, further comprising an intermediate layer disposed between the recording medium layer and the optical filter layer, the intermediate layer reflecting or absorbing the visible light at least partially.

### [Item 3]

The optical stack of item 2, wherein the intermediate layer has polarization selectivity.

### [Item 4]

The optical stack of any one of items 1 through 3, wherein the pattern includes a pattern formed of infrared-absorbing ink.

### [Item 5]

The optical stack of any one of items 1 through 4, wherein the pattern includes a pattern formed of retro-reflective ink.

### [Item 6]

The optical stack of any one of items 1 through 5, further comprising an adhesive layer disposed between the recording medium layer and the optical filter layer.

### [Item 7]

The optical stack of any one of items 1 through 3, wherein the pattern has a concaved and convexed structure.

### [Item 8]

The optical stack of item 7, wherein a surface of the concaved and convexed structure includes a specular-reflective surface and a light-scattering surface.

### [Item 9]

The optical stack of item 7 or 8, wherein the concaved and convexed structure and the optical filter layer are bonded to each other at least partially.

### [Item 10]

The optical stack of any one of items 7 through 9, wherein the concaved and convexed structure and the optical filter layer have an air layer disposed in at least a part of a region therebetween.

### [Item 11]

The optical stack of any one of items 1 through 10, further comprising a decorative layer disposed on the side of the first main surface with respect to the optical filter layer.

### [Item 12]

The optical stack of any one of items 1 through 11, further comprising a surface protective layer disposed on the side of the first main surface with respect to the optical filter layer.

### [Item 13]

The optical stack of any one of items 1 through 12, wherein the optical filter layer has a linear transmittance of 60% or higher for light having a wavelength in at least a part of a wavelength range that is not shorter than 780 nm but not longer than 2000 nm.

### [Item 14]

The optical stack of any one of items 1 through 13, wherein a portion of the optical stack that is disposed on a front side with respect to the recording medium layer has a diffuse transmittance of 24% or lower for the visible light and a diffuse transmittance of 40% or higher for near infrared light having a wavelength that is not shorter than 780 nm but not longer than 1350 nm.

### [Item 15]

The optical stack of any one of items 1 through 14, wherein the optical filter layer includes a matrix and microparticles acting as light-scattering mediums dispersed in the matrix.

### [Item 16]

The optical stack of item 15, wherein the microparticles form at least a colloidal amorphous array.

### [Item 17]

The optical stack of item 15 or 16, wherein the optical filter layer has a transmittance curve, for a wavelength range of the visible light, including a curved portion in which a linear transmittance monotonically decreases from the longer wavelength side to the shorter wavelength side, and the curved portion is shifted to the longer wavelength side as an angle of incidence increases.

### [Item 18]

The optical stack of any one of items 1 through 17, wherein the pattern represents information.

### [Item 19]

The optical stack of item 18, wherein the pattern includes a barcode, a QR code or an AR marker.

### [Item 20]

A system, comprising:
the optical stack of claim 18 or 19;
an infrared detection device reading the pattern from the optical stack by use of the infrared light; and
a control circuit generating a control signal based on the information.

### [Item 21]

The system of claim 20, wherein the information includes positional information. The control signal is sent to, for example, a robot and used to control the robot.

### ADVANTAGEOUS EFFECTS OF INVENTION

According to an embodiment of the present invention, an optical stack configured so that a pattern readable by infrared light is not visible, and a novel system using the same are provided. The optical stack according to an embodiment of the present invention may exhibit white, and may include various decorative layers. Therefore, the pattern readable by the infrared light may be caused not to be visible without an external appearance or a design of an item provided with the pattern being spoiled. Also according to an embodiment of the present invention, a novel system using an optical stack having a pattern representing information may be provided.

### BRIEF DESCRIPTION OF DRAWINGS

FIG. **1** is a schematic cross-sectional view of an optical stack **100** according to an embodiment of the present invention.
FIG. **2** is a plan view showing an example of pattern **120p** included in a recording medium layer **120** of the optical stack **100.**
FIG. **3** is a schematic cross-sectional view of another optical stack **100A** according to an embodiment of the present invention.
FIG. **4** is a block diagram showing an example of configuration of a system **400** according to an embodiment of the present invention.
FIG. **5** is a schematic cross-sectional view of an optical filter layer **110.**
FIG. **6** shows an example of cross-sectional TEMP image of the optical filter layer **110.**
FIG. **7** is a graph normalized with the maximum transmittance, showing an example of incident angle dependence of the linear transmittance spectrum of the optical filter layer **110.**

### DESCRIPTION OF EMBODIMENTS

Hereinafter, an optical stack and a novel system using the same according to an embodiment of the present invention will be described with reference to the drawings. Embodiments of the present invention are not limited to the embodiment described below.

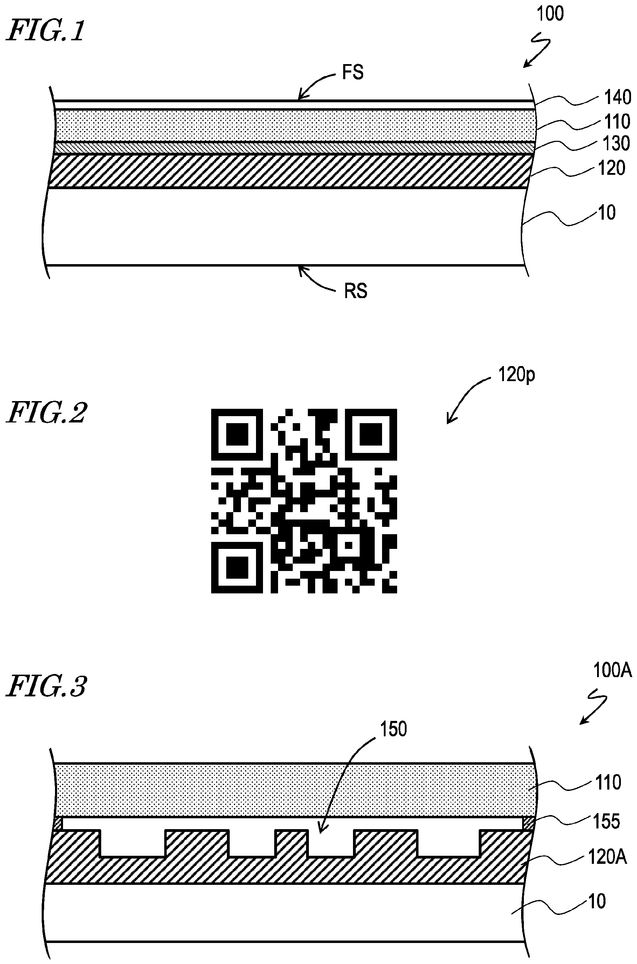

FIG. **1** is a schematic cross-sectional view of an optical stack **100** according to an embodiment of the present invention. The optical stack **100** has a front surface (first main surface) **FS** and a rear surface (second main surface) **RS** disposed on the opposite side to the front surface **FS.** The optical stack **100** includes an optical filter layer **110** transmitting infrared light and diffusely reflecting visible light, and a recording medium layer **120** disposed on the rear surface **RS** side with respect to the optical filter layer **110** and having a pattern readable by the infrared light through the optical filter layer **110.** The optical stack **100** is configured such that the pattern is not visible through the optical filter layer **110.** The pattern may be, for example, a pattern including information such as a pattern **120p,** a plan view of which is shown in FIG. **2****,** e.g., an AR marker such as a QR code or the like, or may be a general design (encompassing, for example, an illustration, a letter, a motif, and a color). The optical stack **100** is typically sheet-like. Herein, the term "sheet-like" is used to encompass "plate-like" and "film-like", with no limitation on the rigidity (flexibility) or the thickness of the sheet.

The optical stack **100** further includes an intermediate layer **130** disposed between the recording medium layer **120** and the optical filter layer **110.** The intermediate layer **130** reflects or absorbs the visible light at least partially. In the case where the optical filter layer **110** has certain optical characteristics, the intermediate layer **130** may be omitted. The intermediate layer **130** may have, for example, polarization selectivity.

The optical stack **100** further includes a decorative layer **140** disposed on the front surface **FS** side with respect to the optical filter **110.** The decorative layer **140** may be omitted. A surface protective layer may be further provided instead of the decorative layer **140,** or on the front surface **FS** side with respect to the decorative layer **140.** The surface protective layer may be, for example, a hard coat layer, an antifouling layer, a reflection-preventive layer, and/or an anti-glare layer, and may include a single layer or a stack of two or more layers. The optical stack **100** may further include a surface protective layer or the like on the rear surface **RS** side when necessary.

The optical stack **100** shown in FIG. **1** includes a substrate layer **10,** and includes the recording medium layer **120** and the optical filter layer **110** on the substrate layer **10.** The substrate layer **10** may be a surface of another item, and the optical stack **100** does not need to include the substrate layer **10.** Although not shown, an adhesive layer (encompassing a pressure-sensitive adhesive layer) may be provided when necessary between the plurality of layers included in the optical stack **100.** The plurality of layers may include a substrate layer that supports a layer exhibiting a function of each of the layers. The substrate layer is appropriately selected so as not to spoil the optical characteristics of the optical stack **100.**

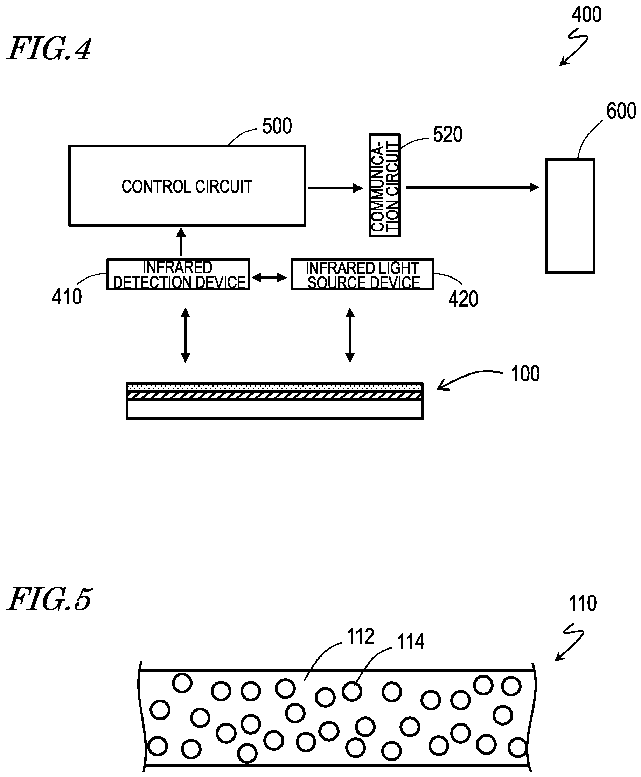

As described below with reference to FIG. **5****,** FIG. **6** and FIG. **7****,** an optical filter described in International Application PCT/JP2021/010413 filed by the present Applicant may be preferably used as the optical filter layer **110.** The optical filter layer **110** is not limited to this, and may be any optical filter that has a high linear transmittance for the infrared light and a relatively low diffuse transmittance for the visible light. In this specification, the term "infrared light" encompasses at least light (electromagnetic waves) having a wavelength in a range that is not shorter than 780 nm but not longer than 2000 nm. The term "visible light" refers to light having a wavelength in a range that is not shorter than 400 nm but not longer than 780 nm.

It is preferred that the optical filter layer **110** has a linear transmittance of 60% or higher for light having a wavelength in at least a part of the range that is not shorter than 780 nm but not longer than 2000 nm. The optical filter layer **110** includes, for example, a matrix and microparticles acting as light-scattering mediums dispersed in the matrix. The microparticles form, for example, at least a colloidal amorphous array. The optical filter layer **110** has a transmittance curve, for a wavelength length range of the visible light, including a curved portion in which the linear transmittance monotonically decreases from the longer wavelength side to the shorter wavelength side, and the curved portion may have a feature of being shifted toward the longer wavelength side as the angle of incidence increases.

It is preferred that a portion of the optical stack **100** that is disposed on the front surface **FS** side with respect to the recording medium layer **120** has a diffuse transmittance of 24% or lower for the visible light and a diffuse transmittance of 40% or higher for near infrared light having a wavelength that is not shorter than 780 nm but not longer than 1350 nm. The portion of the optical stack **100** that is disposed on the front surface **FS** side with respect to the recording medium layer **120** may be referred to as a "concealing stack". For example, a concealing stack may be pasted on an existing recording medium layer by use of an adhesive layer to form the optical stack **100.**

FIG. **2** is a plan view of a QR code **120p** as an example of pattern **120p** readable by the infrared light and included in the recording medium layer **120** of the optical stack **100.** The pattern **120p** is formed of, for example, infrared-absorbing ink. The infrared-absorbing ink contains, for example, carbon, oilbased ink, dye or pigment, and any of a wide range of commercially available products of such ink may be used. Alternatively, the pattern **120p** may be formed of retro-reflective ink (e.g., retro-reflective paint Bright Coat Water-based N type produced by Komatsu Process Co., Ltd.). Still alternatively, the pattern **120p** may be produced by cutting a portion corresponding to the pattern **120p** from a prism-type retro-reflective sheet (Nikkalite crystal grade CRG-CF series produced by Nippon Carbide Industries Co. Inc.) or a bead-type retro-reflective sheet (Nikkalite RS series produced by Nippon Carbide Industries Co. Inc.). Still alternatively, the pattern **120p** may be formed by printing infrared-absorbing ink on a retro-reflective sheet.

The pattern, of the recording medium layer **120,** readable by the infrared light is not limited to the above-described example. For example, a recording medium layer **120A** included in an optical stack **100A** shown in FIG. **3** has a concaved and convexed structure. For example, concaved portions of the concaved and convexed structure may be black portions (infrared-absorbing ink) of the QR code of the pattern **120p** shown in FIG. 2. A surface of the concaved and convexed structure may be, for example, a specular-reflective surface or a light-scattering surface (diffuse-reflective surface). Surfaces of the concaved portions and surfaces of convexed portions of the concaved and convexed structure may have different states from each other. Infrared-absorbing ink may be applied to the surfaces of the concaved portions or the convexed portions.

In the case where the recording medium layer **120A** has a concaved and convexed structure as in the optical stack **100A,** the concaved and convexed structure and the optical filter layer **110** may be at least partially bonded to each other with, for example, an adhesive layer **155.** In this case, the concaved and convexed structure of the recording medium layer **120A** and the optical filter layer may have an air layer **150** formed in at least a part of a region therebetween. Oppositely to the above, the entirety of the region between the concaved and convexed structure of the recording medium layer **120A** and the optical filter layer may be the adhesive layer **150.**

Now, with reference to FIG. **4****,** an example of configuration of a system **400** according to an embodiment will be described. The system **400** includes the optical stack **100,** an infrared detection device **410** reading a pattern from the optical stack **100** by use of the infrared light, and a control circuit **510** generating a control signal based on information represented by the pattern. The control signal is, for example, sent to a robot **600.** FIG. **4** is a block diagram showing an example of configuration of the system **400** according to an embodiment of the present invention.

As shown in FIG. **4****,** the system **400** includes the infrared detection device **410** reading the pattern **120p** of the recording medium layer **120** through the optical filter layer **120** included in the optical stack **100** described above and the control circuit **510** generating a control signal based on the information represented by the pattern. The control circuit **510** is, for example, a processor of a computer, and may execute, for example, a program (software) specifying the information represented by the pattern. The system **400** may further include a storage device storing the program or the like when necessary. The system **400** may further include an infrared light source device **420** irradiating the optical stack **100** with the infrared light. The system **400** may further include a communication circuit **520** sending a control signal to the outside thereof (e.g., to the robot **600).**

The infrared light source device **420** emits infrared light having a predetermined pattern (e.g., a pattern of a great number of dots), and as a result, the pattern is read at high precision. The infrared light source device **420** is, for example, a three-dimensional sensor or a three-dimensional camera. The infrared light source device **420** is, for example, an infrared LED or an infrared laser (semiconductor laser). In the case where the pattern has a concaved and convexed structure, the infrared light source device **420** and the infrared detection device **410** may read the pattern by a Time-of-Flight method, like by LiDAR, by use of the infrared light reflected by the convexed portions (concaved portions). Such a process is not limited to using a beam scanning method, and may use a flash method.

For example, the following may be performed. The optical stack **100** having a pattern representing positional information formed in the recording medium layer **120** is pasted on, for example, a floor or a wall that defines a passageway in a plant; a control signal is generated based on the positional information acquired by the infrared light from the optical stack **100;** the control signal is sent to the robot **600;** and the robot **600** is caused to make a predetermined motion. The infrared detection device **410,** the infrared light source device **420** and the control circuit **510** may be provided in the robot **600.**

The optical stack **100** may have a design harmonized with the design of the environment in which the optical stack **100** is to be disposed. Therefore, even if a large number of the optical stacks **100** are disposed, the external appearance of the environment is not spoiled. For this reason, for example, a large number of the optical stacks **100** each having a pattern representing the positional information formed therein as described above are disposed, and as a result, correct positional information may be provided and a digital space and an actual space may be associated with each other more accurately.

Now, with reference to FIG. **5****,** FIG. **6** and FIG. **7****,** the optical filter layer **110** will be described in detail.

The optical filter layer **110** preferably usable in the optical stack **100** according to an embodiment of the present invention includes a matrix and microparticles dispersed in the matrix. The microparticles form at least a colloidal amorphous array. The optical filter layer **110** has a linear transmittance of 60% or higher for light having a wavelength in at least a part of the range that is not shorter than 780 nm but not longer than 2000 nm. For example, the optical filter layer **110** having a linear transmittance of 60% or higher for light having a wavelength of 950 nm and light having a wavelength of 1550 nm may be provided. Light (i.e., near infrared light) for which the linear transmittance of the optical filter layer **110** is 60% or higher is preferably in a wavelength range that is, for example, not shorter than 810 nm but not longer than 1700 nm, and is more preferably in a wavelength range of, for example, not shorter than 840 nm but not longer than 1650 nm. Herein, it is preferred that the matrix and the microparticles are both transparent to the visible light (hereinafter, referred to simply as "transparent"). The optical filter layer **110** may exhibit white.

The optical filter layer **110** includes the colloidal amorphous array. The colloidal amorphous array is an array of colloidal particles (particle size: 1 mm to 1 µm) that does not have a long-range order and does not cause Bragg reflection. This is in contrast a case where colloidal particles are distributed so as to have a long-range order, as a result of which, a so-called colloidal crystal (a type of photonic crystal) is generated to cause Bragg reflection. That is, the microparticles (colloidal particles) included in the optical filter layer **110** do not form a diffraction grating.

The microparticles included in the optical filter layer **110** include monodispersed microparticles having an average particle size that is at least 1/10 of the wavelength of the infrared light. That is, the average particle size of the microparticles is preferably at least 80 nm or longer, more preferably 150 nm or longer, and still more preferably 200 nm or longer for the infrared light having a wavelength in the range that is not shorter than 780 nm but not longer than 2000 nm. The microparticles may include two or more types of monodispersed particles having different average particle sizes from each other. It is preferred that each of the microparticles is substantially spherical. In this specification, the term "microparticles" (plural) is used also to refer to an array of microparticles, and the term "monodispersed microparticles" refers to microparticles having a coefficient of variation (standard deviation/average particle size, represented by the percentage) of 20% or lower, preferably 10% or lower, and more preferably 1 to 5%. The optical filter layer **110** uses the particles having a particle size (particle diameter; corresponding to equivalent volume diameter) that is at least 1/10 of the wavelength, and thus increases the linear transmittance for the infrared light.

Herein, the average particle size was found based on a three-dimensional SEM image. Specifically, Helios G4 UX produced by FEI Company was used as a focused ion beam scanning electron microscope (hereinafter, referred to as an "FIB-SEM") to acquire successive cross-sectional SEM images. Positions of the successive images were corrected, and then a three-dimensional image was re-constructed. In more detail, the acquisition of the cross-sectional backscattered electron image by use of the SEM and processing by the FIB (acceleration voltage: 30 kV) were repeated 100 times with an interval of 50 nm, and thus the three-dimensional image was re-constructed. The obtained three-dimensional image was binarized by use of the Segmentation function of analysis software (AVIZO produced by Thermo Fisher Scientific Inc.), and thus an image of the microparticles was extracted. Next, a Separate object operation was performed in order to identify each of the microparticles, and then the volume of each microparticle was calculated. Assuming that each microparticle was spherical, the equivalent volume diameter of each microparticle was calculated. A value found by averaging the particle sizes of the microparticles was set as an average particle size.

The optical filter layer **110** adjusts either one of the refractive indices of the microparticles and the matrix, the average particle size of the microparticles, the volume fraction of the microparticles, the distribution (degree of aperiodicity) of the microparticles, and the thickness of the optical filter layer **110,** and thus the linear transmittance for light having a wavelength in at least a part of the range that is not shorter than 780 nm but not longer than 2000 nm is made 60% or higher.

The optical filter layer **110** may exhibit white. Herein, the term "white" refers to colors having x and y coordinates respectively in the ranges of 0.25 ≤ x ≤ 0.40 and 0.25 ≤ y ≤ 0.40 on a CIE 1931 chromaticity diagram where the standard light is from a D65 light source. Needless to say, the degree of whiteness is higher as the x and y coordinates are closer to x = 0.333 and y = 0.333. The x and y coordinates are preferably 0.28 ≤ x ≤ 0.37 and 0.28 ≤ y ≤ 0.37, and more preferably 0.30 ≤ x ≤ 0.35 and 0.30 ≤ y ≤ 0.35. The value of L* measured by an SCE method on the CIE 1976 color space is preferably 20 or greater, more preferably 40 or greater, still more preferably 50 or greater, and especially preferably 60 or greater. When the value of L* is 20 or greater, the color may be considered as generally white. The upper limit of the value L* is, for example, 100.

FIG. **5** is a schematic cross-sectional view of the optical filter layer **110.** The optical filter layer **110** includes a matrix **112** transparent to the visible light, and transparent microparticles **114** dispersed in the transparent matrix **112.** The microparticles **114** behave as light-scattering mediums. The optical filter layer **110** includes a layer having the microparticles **114,** acting as the light-scattering mediums, dispersed in the matrix **112.** The microparticles **114** may form, for example, at least a colloidal amorphous array. In this case, the optical filter layer **110** may include other microparticles that do not disturb the colloidal amorphous array formed by the microparticles **114.**

As schematically shown in FIG. **5****,** the optical filter layer **110** has a substantially flat surface. Herein, the expression "substantially flat surface" refers to a surface that does not have a concaved and convexed structure of such a size as to scatter (diffract) or diffusedly reflect the visible light or the infrared light. The optical filter layer **110** is, for example, film-like but is not limited to this.

The transparent microparticles **114** are, for example, silica microparticles. As the silica microparticles, for example, silica microparticles synthesized by, for example, a Stober method may be used. As the microparticles, inorganic microparticles other than silica microparticles may be used. Resin microparticles may be used. As the resin microparticles, for example, microparticles formed of at least one of polystyrene and poly(methyl methacrylate) are preferred. Microparticles formed of crosslinked polystyrene, crosslinked poly(methyl methacrylate) or crosslinked styrene-methyl methacrylate copolymer are more preferred. As such microparticles, for example, polystyrene microparticles or poly(methyl methacrylate) microparticles synthesized by emulsion polymerization may be used where appropriate. Hollow silica microparticles and hollow resin microparticles containing air may also be used. Microparticles formed of an inorganic material is advantageous in being high in heat resistance and light resistance. The volume fraction of the microparticles with respect to the entirety of the layer (including the matrix and the microparticles) is preferably, not lower than 6% but not higher than 60%, more preferably, not lower than 20% but not higher than 50%, and still more preferably, not lower than 20% but not higher than 40%. The transparent microparticles **114** may have optical isotropy.

The matrix **112** may be formed of, for example, acrylic resin (e.g., poly(methyl methacrylate), poly(methyl acrylate)), polycarbonate, polyester, poly(diethyleneglycolbisallylcarbonate), polyurethane, epoxy resin, polyimide or the like, but is not limited to being formed of any of these. The matrix **112** is preferably formed of a curable resin (thermosetting or photocurable), and is preferably formed of a photocurable resin from the point of mass-productivity. As the photocurable resin, any of various types of (meth)acrylate may be used. It is preferred that the (meth)acrylate contains a bifunctional or at least trifunctional (meth)acrylate. It is preferred that the matrix **112** has optical isotropy. In the case where a curable resin containing a polyfunctional monomer is used, the matrix **112** having a crosslinked configuration is provided, which may improve the heat resistance and the light resistance.

In the case where the matrix **112** is formed of a resin material, the optical filter layer **110** may be like a flexible film. The optical filter layer **110** has a thickness that is, for example, not less than 10 µm but not greater than 10 mm. In the case where the thickness of the optical filter layer **110** is, for example, not less than 10 µm but not greater than 1 mm, or more preferably, not less than 10 µm but not greater than 500 µm, the optical filter layer **110** may conspicuously exhibit flexibility.

In the case where the silica microparticles having a hydrophilic surface are used as the microparticles, it is preferred to form the microparticles by, for example, photocuring a hydrophilic monomer. Examples of the hydrophilic monomer include polyethyleneglycol(meth)acrylate, polyethyleneglycoldi(meth)acrylate, polyethyleneglycoltri(meth)acrylate, polypropyleneglycol(meth)acrylate, polypropyleneglycoldi(meth)acrylate, polypropyleneglycoltri(meth)acrylate, 2-hydroxyethyl(meth)acrylate, 2-hydroxypropyl(meth)acrylate, acrylamide, methylenebisacrylamide, or ethoxylated bisphenol A di(meth)acrylate, but the hydrophilic monomer is not limited to any of these. These monomers may be used independently or as a mixture of two or more thereof. Needless to say, the two or more monomers may contain a monofunctional monomer and a polyfunctional monomer, or two or more polyfunctional monomers.

These monomers may be cured by use of a photoinitiator where appropriate. Examples of the photoinitiator include carbonyl compounds such as benzoin ether, benzophenone, anthraquinone, thioxane, ketal, acetophenone and the like; sulfur compounds such as disulfide, dithiocarbamate and the like; organic peroxides such as benzoyl peroxide and the like; azo compounds; transition metal complexes; polysilane compounds; dye sensitizers; and the like. The photoinitiator is used in an amount that is preferably not smaller than 0.05 parts by mass but not larger than 3 parts by mass, and more preferably, not smaller than 0.05 parts by mass but not larger than 1 part by mass with respect to 100 parts by mass of the mixture of the microparticles and the monomer.

Where the refractive index of the matrix with respect to the visible light is n_{M} and the refractive index of the microparticles with respect to the visible light is n_{P}, |n_{M}-n_{P}| (hereinafter, may be referred to simply as the "refractive index difference") is preferably 0.01 or larger, preferably 0.06 or smaller, more preferably 0.03 or larger, and more preferably 0.11 or smaller. In the case where the refractive index difference is smaller than 0.03, the scattering intensity is weak and desired optical characteristics are not easily provided. In the case where the refractive index difference exceeds 0.11, the linear transmittance for the infrared light may be decreased. In the case where, for example, zirconia microparticles (refractive index: 2.13) and an acrylic resin are used to realize a refractive index of 0.6, the linear transmittance for the infrared light may be adjusted by decreasing the thickness. In this manner, the linear transmittance for the infrared light may be adjusted also by, for example, controlling the thickness of the optical filter layer and the refractive index difference. When being used for a certain use, the optical filter layer may be used in a state of being stacked on an infrared-absorbing filter. The refractive index with respect to the visible light may be represented by the refractive index with respect to light having a wavelength of, for example, 546 nm. Herein, the refractive index is the refractive index with respect to the light having a wavelength of 546 nm, unless otherwise specified.

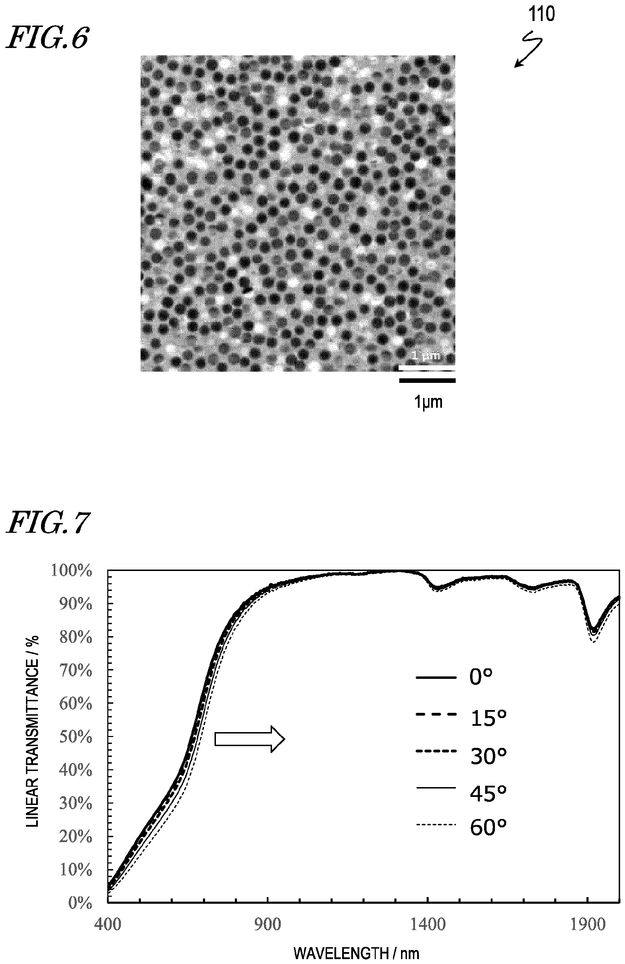

FIG. **6** shows a cross-sectional TEM image of the optical filer layer **110.** In the TEM image in the figure, white circles are silica microparticles and black circles are portions from which the silica microparticles have been pulled off. As represented by the cross-sectional TEM image of the optical filer layer **110,** the silica microparticles are dispersed substantially uniformly.

FIG. **7** is a graph normalized by the maximum transmittance, and shows the incident angle dependence of the linear transmittance spectrum of the optical filter layer **110.** The transmittance curve of the optical filter layer **110** shown in FIG. **7** includes a curved portion in which the linear transmittance monotonically increases from the visible light to the infrared light, and this curved portion is shifted (by about 50 nm) toward the longer wavelength side as the angle of incidence increases. In other words, the curved portion in which the linear transmittance monotonically decreases from the infrared light to the visible light is shifted toward the longer wavelength side as the angle of incidence increases. Such a characteristic incident angle dependence is considered to be caused by the silica microparticles included in the optical film forming the colloidal amorphous array.

The configuration, the optical characteristics and the production method of the optical filter layer **110** are described in detail in International Application PCT/JP2021/010413 filed by the present Applicant. The entirety of the disclosure of International Application PCT/JP2021/010413 is incorporated herein by reference. FIG. **6** and FIG. **7** show the results of example 1 in the above-mentioned International Application.

Now, examples of the optical filter layer described in the above-mentioned International Application and the optical stack including the same (examples 1 through 11, comparative example 2) will be described. In example 6 of the above-mentioned International Application, an optical filter (a PET film and an optical filter layer formed thereon) includes silica microparticles (having an average particle size of about 220 mm) . The thickness of the optical filter layer in the optical filter in example 6 mentioned above was adjusted to be 200 µm and was used in each of examples 2 through 11 and comparative example 2. The PET film has a very small influence on the optical characteristics, and the above-mentioned optical filter layer has optical characteristics substantially the same as those of an optical stack including an intermediate layer formed of a material reflecting or absorbing the visible light at least partially and an optical filter layer directly formed thereon. In example 6, silica microparticles having an average particle size of about 300 nm were used, and the thickness of the optical filter layer was about 350 µm.

An intermediate layer that reflects or absorbs the visible light at least partially may be referred to as a "visible light transflective layer". The visible light transflective layer has transmission characteristics and reflection characteristics with which the visible light transflective layer reflects a part of the visible light incident thereon and transmits the rest of the visible light. The transmittance of the visible light transflective layer for the visible light is preferably 10% to 70%, more preferably 15% to 65%, and still more preferably 20% to 60%. The reflectance of the visible light transflective layer for the visible light is preferably 30% or higher, more preferably 40% or higher, and still more preferably 45% or higher. For the infrared light, the visible light transflective layer has a transmittance of preferably 10% or higher, more preferably 15% or higher, and still more preferably 20% or higher. As the visible light transflective layer, for example, a half mirror, a reflective polarizer, a louver film, a cold mirror or the like may be used.

As the half mirror, for example, a multi-layer stack including two or more dielectric films having different refractive indices stacked on each other may be used. Such a half mirror preferably has metallic luster. Examples of materials of the dielectric films include metal oxide, metal nitride, metal fluoride, thermoplastic resin (e.g., polyethyleneterephthalate (PET)) and the like. The multi-layer stack of the dielectric films reflects a part of incident light at an interface by the difference in the refractive index between the dielectric films stacked. The phase of the incident light and the reflected light is changed by the thicknesses of the dielectric films to adjust the degree of interference of the two types of light, and thus the reflectance may be adjusted. A half mirror formed of a half mirror layer stack may have a thickness that is, for example, not less than 50 µm but not greater than 200 µm. Usable examples of such a half mirror include commercially available products such as, for example, trade name "PICASUS" produced by Toray Industries Inc.

The reflective polarizer has a function of transmitting polarized light in a specific polarization state (polarization direction) and reflecting light in other polarization states. The reflective polarizer may be of a linearly polarized light separation type or a circularly polarized light separation type. The linearly polarized light separation type is preferred.

As the reflective polarizer of the linearly polarized light separation type, a reflective polarizer described in, for example, Japanese PCT National Phase Laid-Open Patent Publication No. Hei 9-507308 may be used. Examples of usable commercially available products include trade name "APCF" produced by Nitto Denko Corporation, trade name "DBEF" produced by 3M, and trade name "APF" produced by 3M. The commercially available products may be used as they are, or may be used after being subjected to secondary processing (e.g., rolled). As the reflective polarizer of the circularly polarized light separation type, for example, a stack of a film including an immobilized cholesteric liquid crystal material and a λ/4 plate may be used. Alternatively, a wire grid polarization layer may be used.

The cold mirror has a function of transmitting only the infrared light and reflecting the visible light and ultraviolet light. As the cold mirror, for example, commercially available products such as trade name "PICASUS" produced by Toray Industries Inc. or the like may be used.

An intermediate layer that absorbs the visible light at least partially may be referred to as a "visible light absorption layer". The visible light absorption layer may be formed of, for example, black ink transmitting the infrared light. The thickness of the visible light absorption layer may be changed to adjust the transmittance for the visible light.

VIS non-visibility is considered as good (OK) in a case where the pattern of the recording medium layer is not clearly visible through an optical filter, and is not considered as good (expressed as "NG" in the tables) in a case where the pattern of the recording medium layer is clearly visible through an optical filter. IR visibility is considered as good (OK) in a case where the pattern is clearly visible through an optical filter by use of, for example, an infrared camera, and is not considered as good (expressed as "NG" in the tables) in a case where the pattern is not clearly visible through an optical filter by use of the infrared camera. Herein, an ISO12233 resolution chart was used as the pattern, and the evaluation was made in a state where each of the optical filters was in contact with the chart.

The VIS diffuse transmittance represents an average transmittance (%) for the visible light in a wavelength range that is not shorter than 350 nm but not longer than 780 nm, and the IR diffuse transmittance represents an average transmittance (%) for the infrared light (near infrared light) in the wavelength range that is not shorter than 780 nm but not longer than 1350 nm. The diffuse transmittance is a transmittance measured in a state where an optical stack was disposed in an opening of an integral sphere, and is correlated with the visibility in a state where the optical stack was in contact with the pattern. As a spectroscope, the UV-Visible/NIR Spectrophotometer UH4150 (produced by Hitachi High-Tech Corporation) was used, and the measurement was performed at an interval of 1 nm.

**[Table 1]**

| | EX. 1 | EX. 2 | EX. 3 | EX. 4 | EX. 5 | EX. 6 | EX. 7 | EX. 8 | EX. 9 | EX. 10 | EX. 11 |
|---|---|---|---|---|---|---|---|---|---|---|---|
| VIS NON-VISIBILITY | OK | OK | OK | OK | OK | OK | OK | OK | OK | OK | OK |
| IR VISIBILITY | OK | OK | OK | OK | OK | OK | OK | OK | OK | OK | OK |
| VIS DIFFUSE TRANSMITTANCE | 16.3 | 11.1 | 8.3 | 9.9 | 20.5 | 19.3 | 17.25 | 18.5 | 8.5 | 1.4 | 2.2 |
| IR DIFFUSE TRANSMITTANCE | 43.1 | 86.1 | 85.4 | 88.2 | 90.8 | 57.9 | 56.3 | 57.0 | 78.8 | 55.2 | 67.8 |

**[Table 2]**

| | COMPARATIVE EX. 1 | COMPARATIVE EX. 2 |
|---|---|---|
| VIS NON-VISIBILITY | NG | OK |
| IR VISIBILITY | NG | NG |
| VIS DIFFUSE TRANSMITTANCE | 24.6 | 0.0 |
| IR DIFFUSE TRANSMITTANCE | 12.5 | O.O |

First, with reference to Table 2, the optical characteristics of the comparative examples will be described.

Comparative example 1 is regarding a cloudy plastic plate (polystyrene; thickness: 0.5 mm) . The VIS diffuse transmittance is about 25%. The recording medium layer is not clearly visible but is slightly seen through, and thus the VIS non-visibility is not good. It is preferred that the VIS diffuse transmittance is 24% or lower. The IR diffuse transmittance is as low as about 13%, and thus the IR visibility is not good.

Comparative example 2 is regarding an optical stack including the above-described optical filter layer (including the silica microparticles, in example 6 of the above-described International Publication, having an average particle size of about 200 nm; and having a thickness of 200 µm) and a metal thin film, and does not transmit the visible light or the infrared light. Therefore, the VIS non-visibility is good, but the IR visibility is not good.

Now, Table 1 will be referred to. As can ben seen from Table 1, in all of examples 1 through 11, the VIS non-diffuse transmittance is 21% or lower and the IR diffuse transmittance is 40% or higher. The VIS non-visibility and the IR visibility are both good. The VIS diffuse transmittance is preferably 24% or lower, and more preferably 21% or lower. The IR diffuse transmittance is preferably 40% or higher, more preferably 50% or higher, and still more preferably 60% or higher.

Example 1 is regarding an optical stack including the above-described optical filter (including the silica microparticles, in example 6 of the above-described International Publication, having an average particle size of about 200 nm; and having a thickness of 200 µm) and a wire grid reflective layer.

Example 2 is regarding an optical stack including the above-described optical filter (including the silica microparticles, in example 6 of the above-described International Publication, having an average particle size of about 200 nm; and having a thickness of 200 µm) and a half mirror formed of a dielectric multi-layer film so as to transmit the infrared light.

Example 3 is regarding an optical stack including the above-described optical filter (including the silica microparticles, in example 6 of the above-described International Publication, having an average particle size of about 200 nm; and having a thickness of 200 µm) and a visible light absorption layer formed by use of IR-transmissive black ink (thickness: 6 µm).

Example 4 is regarding an optical stack including the above-described optical filter (including the silica microparticles, in example 6 of the above-described International Publication, having an average particle size of about 200 nm; and having a thickness of 200 µm) and a visible light absorption layer formed by use of IR-transmissive black ink (thickness: 2 µm).

Example 5 corresponds to comparative example A of the above-described International Publication, and corresponds to an optical product described in Japanese Laid-Open Patent Publication No. 2013-65052.

Example 6 is regarding an optical filter that includes silica microparticles having an average particle size of about 300 nm and has a thickness of about 350 µm. The VIS diffuse transmittance is 20% or lower and thus the VIS non-visibility is sufficiently high. The IR diffuse transmittance is 58% or higher, and thus the IR visibility is good. As can be seen, even if the intermediate layer is not provided, the optical characteristics of the optical filter may be adjusted to provide an optical stack that is good both in the VIS non-visibility and the IR visibility.

Example 7 is regarding an optical stack including the above-described optical filter (equivalent to example 6) and a cyan decorative layer. The decorative layer was formed by printing performed on an OHP film by use of an inkjet printer (Colorio EP812A produced by Seiko Epson Corp.; standard ink SAT-6CL). This is also applicable to Examples 8 through 11 below.

Example 8 is regarding an optical stack including the above-described optical filter (equivalent to example 6) and a magenta decorative layer.

Example 9 is regarding an optical stack including the above-described optical filter (equivalent to example 6) and a yellow decorative layer.

Example 10 is regarding an optical stack including the above-described optical filter (including the silica microparticles, in example 6 of the above-described International Publication, having an average particle size of about 200 nm; and having a thickness of 200 µma) and a black decorative layer.

Example 11 is regarding an optical stack including the above-described optical filter (including the silica microparticles, in example 6 of the above-described International Publication, having an average particle size of about 200 nm; and having a thickness of 200 µma) and a decorative layer having a wood grain pattern.

As can be seen, the optical stack according to an embodiment of the present invention includes an optical filter layer having the above-described features and an optional intermediate layer, and therefore, makes the pattern of the recording medium layer non-visible and readable by the infrared light.

Therefore, the pattern of the recording medium layer may be made accessible to a specific user. The surface of the optical stack may be provided with a design substantially the same as the design of the environment in which the optical stack is to be provided, and thus the optical stack itself may be caused not to be easily visible. An embodiment of the present invention provides a novel system conveying, for example, confidential information. Alternatively, an embodiment of the present invention provides a novel system conveying information without spoiling the external appearance.

## Claims

1. An optical stack having a first main surface and a second main surface on the opposite side to the first main surface, the optical stack comprising:
an optical filter layer transmitting infrared light and diffusely reflecting visible light; and
a recording medium layer disposed on the side of the second main surface with respect to the optical filter layer, the recording medium layer having a pattern readable by the infrared light through the optical filter layer,
wherein the optical stack is configured such that the pattern is not visible through the optical filter layer.

2. The optical stack of claim 1, further comprising an intermediate layer disposed between the recording medium layer and the optical filter layer, the intermediate layer reflecting or absorbing the visible light at least partially.

3. The optical stack of claim 2, wherein the intermediate layer has polarization selectivity.

4. The optical stack of any one of claims 1 through 3, wherein the pattern includes a pattern formed of infrared-absorbing ink.

5. The optical stack of any one of claims 1 through 4, wherein the pattern includes a pattern formed of retro-reflective ink.

6. The optical stack of any one of claims 1 through 5, further comprising an adhesive layer disposed between the recording medium layer and the optical filter layer.

7. The optical stack of any one of claims 1 through 3, wherein the pattern has a concaved and convexed structure.

8. The optical stack of claim 7, wherein a surface of the concaved and convexed structure includes a specular-reflective surface and a light-scattering surface.

9. The optical stack of claim 7 or 8, wherein the concaved and convexed structure and the optical filter layer are bonded to each other at least partially.

10. The optical stack of any one of claims 7 through 9, wherein the concaved and convexed structure and the optical filter layer have an air layer disposed in at least a part of a region therebetween.

11. The optical stack of any one of claims 1 through 10, further comprising a decorative layer disposed on the side of the first main surface with respect to the optical filter layer.

12. The optical stack of any one of claims 1 through 11, further comprising a surface protective layer disposed on the side of the first main surface with respect to the optical filter layer.

13. The optical stack of any one of claims 1 through 12, wherein the optical filter layer has a linear transmittance of 60% or higher for light having a wavelength in at least a part of a wavelength range that is not shorter than 780 nm but not longer than 2000 nm.

14. The optical stack of any one of claims 1 through 13, wherein a portion of the optical stack that is disposed on a front side with respect to the recording medium layer has a diffuse transmittance of 24% or lower for the visible light and a diffuse transmittance of 40% or higher for near infrared light having a wavelength that is not shorter than 780 nm but not longer than 1350 nm.

15. The optical stack of any one of claims 1 through 14, wherein the optical filter layer includes a matrix and microparticles acting as light-scattering mediums dispersed in the matrix.

16. The optical stack of claim 15, wherein the microparticles form at least a colloidal amorphous array.

17. The optical stack of claim 15 or 16, wherein the optical filter layer has a transmittance curve, for a wavelength range of the visible light, including a curved portion in which a linear transmittance monotonically decreases from the longer wavelength side to the shorter wavelength side, and the curved portion is shifted to the longer wavelength side as an angle of incidence increases.

18. The optical stack of any one of claims 1 through 17, wherein the pattern represents information.

19. The optical stack of claim 18, wherein the pattern includes an AR marker.

20. A system, comprising:
the optical stack of claim 18 or 19;
an infrared detection device reading the pattern from the optical stack by use of the infrared light; and
a control circuit generating a control signal based on the information represented by the pattern.

21. The system of claim 20, wherein the information includes positional information.
